# EUROPEAN PATENT SPECIFICATION

(11) **EP 2 399 756 B1**
(45) Date of publication and mention of the grant of the patent: **26.07.2017**
(21) Application number: 10382179.9
(22) Date of filing: 23.06.2010
(51) Int. Cl.: B42D 15/00

(54) **Security element**
Sicherheitselement
Elément de sécurité

(43) Date of publication of application: 28.12.2011
(73) Proprietor: FÁBRICA NACIONAL DE MONEDA Y TIMBRE, 28009 Madrid (ES)
(72) Inventor: Gamo Aranda, Javier, 28009 Madrid (ES); Varela Garcia De Oteyza, Paloma, 28009 Madrid (ES); Ruiz Quevedo, Andrés, 28009 Madrid (ES)
(74) Representative: Carpintero Lopez, Francisco

(56) References cited:
- WO-A1-00/18591
- WO-A1-99/07502
- WO-A2-2008/008635
- DE-A1-102005 039 524
- DE-A1-102005 047 609
- DE-A1-102007 061 979
- US-A- 5 754 332

## Description

### Field of the Invention

The present invention is applied to security elements incorporated in security or value documents, such as bank notes, identification documents, checks, stamps, stamped paper, labels or tickets.

### Background of the Invention

It is a fact that the popularization of low cost and high quality reproduction and printing means, as well as of image capture and modification software, has facilitated security and value document forgery. Given the increasing availability of said means, to prevent forging the documents must be provided with security measures that cannot be reproduced using those image reproduction and printing technologies. Some of said measures are noticeable by the naked eye or with simple means simples and consisting of optically variable inks, diffractive elements, holographs, micro impressions and others, or concealed security measures for the detection of which a specific sensor is required. This second type constitutes an additional level of security, because since they are not detectable by simple means, they are not usually reproduced by a forger. The application of security measures detectable by a machine is widely known. They are essentially based on including in the document a marker having known, specific and well-determined physicochemical properties, the excitation of the marker by means of an external stimulus making the distinctive physical or chemical property evident, and the detection of the latter by means of a sensor which validates the authenticity of the document. The markers are generally distributed in a specific area of the document, their size is usually variable, although preferably in the micron magnitude range, and their orientation in the marked area, by means of impression or any other technique, is usually random; they are generally amorphous or do not present any remarkable geometric characteristics.

Likewise, a number of security measures detectable by the naked eye are based on the incorporation in the document of conductive metal structures or with specific optical properties producing diffractive, holographic effects, the selection of a determined wavelength, constructive or destructive interferences for different wavelengths, optically variable effects and others.

Both for the concealed measures and for the visible measures, the relationship between the dimensions and structure of the elements producing the desired effect and the light wavelength used for verification is of the utmost importance. Therefore, the possibility of distributing in an organized manner elements having a well determined shape and dimensions of the order of magnitude of the light or electromagnetic wave to be used allow achieving optical effects that are visible or detectable by means of sensor which allow verifying the authenticity of a document.

For this purpose, the incorporation of nanoparticles in the document has been proposed, especially if such nanoparticles have a high aspect ratio and are selectively oriented, which allows the authentication of the document by means of checking the dimensions of these nanoparticles, as well as their arrangement. Patent WO 0018591 describes said method, considering the detection of the nanoparticles by various means, particularly by means of their interaction with an electromagnetic wave. The ordered arrangement of the particles is achieved as a result of an external electromagnetic field which orients the particles at some point during the process of preparing the document. The alignment of the particles can thus be affected by the selective application of said field on at least a group of particles. This method presents obvious drawbacks: the nanoparticles usually have a zero net electric charge, which cancels out the effect of an electric field. With respect to their orientation in a magnetic field, it is not possible for non-magnetic materials, and for most magnetic materials it would require very intense fields of several teslas (see for example, "Alignment of carbon nanotubes by magnetic fields and aqueous dispersion", by Jang *et al*.), difficult to achieve in practice in an industrial process. For example, single- or multi-walled carbon nanotubes, like carbon nanofibers, which are some of the most widely used nanomaterials, require a magnetic field of up to 12 teslas of intensity to be aligned.

To solve this problem, the mentioned patent proposes coating the nanoparticle with a second material, either by means of the coating of a continuous layer or by means of adhering dopant particles to the nanoparticle surface. This second dopant material would have a magnetic character or any other physical or chemical property which the first nanoparticle lacks, which first nanoparticle, when it is enveloped by the dopant or adhered thereto, would acquire the properties of the dopant, which would facilitate its orientation and its ordered deposition in the document.

Incorporating a complete or partial covering layer of a second material on the nanoparticle varies the original physicochemical properties thereof when they produce a shielding effect. It is particularly evident that the dimensions of the nanoparticle, as well as the geometry of its surface, are necessarily altered because since the dimensions of the dopant material are of the same order of magnitude as that of the first particle, after its adhesion the final result would be a compound having a much larger size than the original one. This means that the necessary simultaneous combination in one and the same material of electric or magnetic properties or properties of another type which make it orientable and detectable, together with a determined shape or dimensions, clearly limit the number of materials that can be used. Furthermore, the doping with the second particle is a complex and expensive process. Therefore, there are many cases in which nanoparticles of one type with some desirable physical or chemical characteristics cannot be suitably placed in the document.

DE102007061979, DE102005047609, WO00/18591 and DE102005039524 are also part of the prior art.

### Object of the Invention

The present invention solves the previous problem by means of the combined use of at least two different types of nanoparticles, a first type of basically hollow, preferably conductor or semiconductor nanoparticles, susceptible of forming tubular nanostructures or substantially hollow spheres similar to carbon fullerenes or to nanotubes or nanofibers of this material, accompanied by at least a second type of substantially smaller sized nanoparticles, such that they can be introduced inside the first type of particles.

The electromagnetic properties susceptible of converting the larger sized nanoparticles into a marker provided that they have a suitable geometry will be complemented by the properties of the smaller sized nanoparticles inside the former, enabling the ordering of the marker, or alternatively, it will be the larger sized particle which facilitates the ordering or the geometry necessary and the one located therein the one which has the electromagnetic, physical or chemical properties for its easy detection such that in the final compound, the dimensions and shape of which are not the result of the sum of those of its components, but rather basically those of the containing particles, achieve simultaneously meeting the geometric (dimensions and aspect ratio) and physicochemical conditions required for the ordered incorporation and detection of the assembly.

The invention particularly proposes a security element for value or security documents, such as a bank note, comprising a plurality of markers, and wherein each marker comprises a first type of hollow nanoparticle provided internally with at least one nanoparticle of another type having smaller dimensions.The smaller dimensioned particle has properties capable of facilitating the orientation of the assembly of hollow nanoparticle and said smaller nanoparticle, and the hollow particle is preferably transparent to the orienting field of the smaller particle and has properties facilitating its detection. Preferably, but not in a limited manner, the hollow particle is a carbon, TiO₂, BNitr, AlN, ZnO, Al, Ag, Au, Zn₂SiO₄,B ,Pd or silica single- or multi-walled nanotube, nanofiber or fullerene and can incorporate several smaller dimensioned particles having different properties inside the hollow nanoparticle. The invention incorporates a fluid inside the hollow nanoparticle, the hollow nanoparticle is transparent in the visible spectrum and the smaller dimensioned particles have magnetic properties and net electric charge, such that they are free to move in the fluid inside the hollow nanoparticle when a magnetic field is applied.

### Detailed Description of the Invention

In a first embodiment, the hollow particle has geometric and physicochemical properties facilitating its detection, but it lacks the suitable properties for its ordering in the document, which is essential for its detection. In this case, the random superposition of the signals reflected by each of the particles would tend to be canceled out, and said signal therefore could not be detected. In contrast, if the particles are ordered, the signals of each of them will be summed up rather than cancel each other out, thus enabling detection. The ordering is done as a result of another particle susceptible of being oriented, having smaller dimensions than those of the inner basically hollow space of the first particle in which it is introduced. The alignment of the second particle can be carried out according to the properties thereof, with an electric field, magnetic field, a polarized wave, or by means of flux, electromagnetic field alignment being the most common method.

Nanoparticles can be incorporated which, in addition to being orientable, have luminescent (fluorescent and/or phosphorescent) properties to facilitate their detection by means of traditional techniques, as well as the reproduction of optical effects used in security printing. A particular embodiment is a basically hollow and conductor nanotube the typical radius of which is from 100 to 2000 nanometers. It is known by antenna theory that said nanotube, subjected to a non-polarized electromagnetic wave having a wavelength greater than its radius will act as an elementary polarizer, selectively reflecting the component of the wave parallel to the orientation of the nanotube, whereas it will transmit the one perpendicular thereto. If, in contrast, the incident wave is linearly polarized and is parallel to the nanotube, it will be reflected virtually in its entirety, whereas if the polarization is perpendicular to the tube it will be transmitted and the reflection is very low. Nevertheless, for a polarized or non-polarized wave, if instead of a nanotube there is a large number thereof and their orientation is random, the final net effect will be the reflection and transmission of approximately half the intensity of the incident wave, without observing significant polarization states. The present invention solves this problem by means of filling the nanotubes with nanoparticles having a smaller size than the radius of the nanotube, of one or several types. If these particles have magnetic properties (for example, a nanoferrite, nanonickel or any other magnetic compound), and the incorporation of the nanotubes in the document occurs in the presence of a magnetic field, the latter will align the nanoferrites and therefore the nanotubes, such that the latter are ordered in the document. The result is thus a large number of organized elementary polarizers that are not randomly distributed but rather mainly oriented in a controlled manner in a predetermined direction which allow effectively and verifiably changing the polarization state of an incident wave, thus assuring the presence of the nanotubes and the authenticity of the document. If instead of magnetic nanoparticles, nanoparticles with a net electric charge (anions or cations) are used and the incorporation in the security document is performed in the presence of an electric field or a polarized wave, the effect of aligning the nanotubes is also achieved.

The most suitable elements for the hollow nanoparticle are carbon, TiO₂, BNitr, AlN, ZnO, Al, Ag, Au, Zn₂SiO₄, B, Pd and silica single-walled or multi-walled nanotubes, fullerenes or nanofibers, and hollow particles of several of these compounds can be incorporated (in groups with a sufficient number of particles of one and the same compound for their detection) provided that these compounds are chosen such that the hollow nanotube does not shield the particle or smaller sized particles against the orienting field. For example, if the smaller sized particle is magnetite and a static magnetic field is used for orienting, the nanotube cannot be a magnetic shield, because it would then inhibit the effect of the field on the filler particle and the orientation would not occur.

If an electric charge is used for filling and an electric field for orienting, then the tube cannot be a conductor, or at least it should not be so dense that it shields its interior.

Generally, nanotubes, especially if they are single-walled, are not usually so thick that they cause effective shielding in their interior (or they do so for a specific frequency range). Furthermore, carbon nanotubes, depending on their chirality (their structure) can be conductors, semiconductors or insulators, so the suitable carbon nanotubes can always be chosen for their use in the present invention.

The element to be interrogated is the particle (or particles) in the interior. In this case, it is obvious that the orienting field will reach the outer containing nanotube, but the latter should not then stop the interrogating wave. For example, a nanotube made of a magnetic but not conductive material could be used, and it could be filled with amorphous conductor particles (especially if they have a special response at a determined frequency or any property which "customizes" them) which, when adopting the shape of the tube, go on to form a monopole antenna, and they can again produce a polarizing effect that would not be possible if they were not "packaged", such that in the ordering achieved they have a high aspect ratio.

The document in which the nanoparticles are incorporated can be completely or partially made of paper, plastic, polymer or any support of those used in said documents, or their combinations, or it can comprise materials used as support for other security elements added to the document, such as holograms, planchettes, threads, inks, fibrils and other elements commonly added to said documents.

The nanoparticles are characterized by having a high specific surface, which makes them particularly sensitive to an external stimulus, and they can also be characterized by a high aspect ratio, being able to be both in the case of the hollow nanoparticle and in the case of the smaller sized nanoparticles, doped *ex-professo* for the specific desired application.

These nanoparticles can be included directly at the time of manufacturing the substrate of the document, or they can form part of one or several of the security inks used in the document, or they can be incorporated in the security thread, the foil or the plastic coating used for the adhesion of security elements such as holograms, planchettes, threads and the like. A sensor detects the presence and additionally the orientation of the nanoparticles, as well as the relative orientation between them and their dimensions. By means of this technique, the measurement does not essentially depend on the width of the signal, assuring its independence of the intensity and therefore of the amount of nanoparticles contained in the document, as well as the fluctuations of the excitation source or of the response of the detector and of the presence of light or other environmental disturbances, all of which favors the quality of the detection and minimizes the number of false positives or false rejections.

There are several methods, such as growing a nanotube around the nanoparticle to be enveloped, for introducing the smallest particle into the hollow particle. The simplest method is the inclusion of the hollow larger sized nanoparticle in a dispersion containing a suitable concentration of the smaller sized nanoparticle. Capillarity forces will act introducing the fluid and the smaller particles transported by same into the hollow particle, such that the hollow particle is filled with the solution containing the smaller sized nanoparticle. Suitable dispersing agents for this purpose are water, ethylene glycol, glycerin and hydrocarbons. The larger particles already filled with the smaller ones can subsequently be recovered by means of several methods such as decantation, electrophoresis or simply by means of evaporating the fluid used as the carrier. It is also possible to use the final combination of solvent and the two nanoparticles without the need for other process if this combination can go on to form part of a ink. This technique can also generally be used for adding to a hollow particle any desirable quality of another or other types of nanoparticles, such that not only is their orientation and controlled incorporation in the document made possible, but, for example, their dispersibility in inks, their transport in fluidic means, their incorporation in a support or any other desirable rheological property, among others.

Additionally, once the containing particles are incorporated in the document, they are fixed therein, whereas the contained particles, though limited to the dimensions of the containing particles, can move inside same, particularly if they are immersed in a fluid, which is a preferred manner of inserting them in the containing particle, causing effects observable by the naked eye or detectable with a suitable sensor.

Particularly, if the confined particles are in a containing particle transparent to radiation in the visible spectrum and in a fluidic medium, such as that used for inducing their introduction by capillarity into the containing particle, and have net electric charge of the same sign, in the absence of an external electric field they tend to disperse, separating from one another as much as possible until finding an equilibrium or minimum electric potential position due to the action of the electrostatic repulsion forces acting between charges of the same sign. They therefore tend to homogeneously occupy the entire inner volume of the containing particle. The effect is the same if the particles have, in addition to a net electric charge of the same sign, a magnetic character, such as, for example the paramagnetic iron oxide particles or the like, if the electric forces are greater than the magnetic forces either due to the magnitude of the electric charge or due to the fact that the latter is on the surface of the particle, or due to both reasons.

Nevertheless, if the particles have, in addition to a net electric charge, a magnetic character, in the presence of external magnetic fields (such as, for example, that produced by a magnet) the magnetic interaction is reinforced, inducing attraction forces between the magnetic particles which tend to move closer together along the lines of the external magnetic field. When the distance between particles decreases, the electric repulsion forces, inverse to the square distance, increase up to the point that equilibrium occurs between the electric repulsion force and the magnetic attraction force, reorganizing the particles contained in structures oriented according to the lines of the external magnetic field of approximately equidistant particles. These organized chains form diffractive structures which, when illuminated by a white light, will produce for a determined wavelength, which together with the periodicity of the structure induced by the external magnetic field meets Bragg's law, a constructive interference for that particular wavelength, so the containing particle will be observed in the color corresponding to the mentioned wavelength.

Given that the distance between the particles is controlled by the intensity of the external magnetic field which may be varied, for example, by moving the magnet producing it closer or farther away, the diffractive structure varies when moving the magnet closer or farther away, likewise varying the wavelength which in all cases meets Bragg's condition, whereby achieving the effect of a color change induced by the movement of the magnet, or generally the variation of the external magnetic field.

The final result is thus a marker formed by at least two different types of particles which simultaneously meets the geometric, particularly surface, and physicochemical conditions necessary for its detection and the subsequent verification of the document bearing it, together with those necessary for its controlled arrangement therein, due to the nanoparticle or nanoparticles which fill it. This process is substantially different from those already mentioned for creating particles by means of different enveloping layers around a core or the adhesion to the surface of other dopants, and it offers the advantage of its simplicity, in addition to keeping the desirable properties of a marker, particularly the geometric and surface properties, which are determining factors for its detection, basically intact. Once the suitable combination of hollow nanoparticles plus filler nanoparticles is achieved, they are then incorporated in the document in a controlled manner, allowing the authentication thereof.

With this method, the possibilities of increasing the security of the document are very broad, and as several non-limiting examples, it is possible to achieve an alignment of conductor or semiconductor particles (particularly if a change of state from conductor to non-conductor can be induced) with a high aspect ratio and parallel to one another, such that by means of suitably choosing the dimensions of the nanoparticles and the wavelength of the electromagnetic radiation to be used, they configure a linear polarizer for a determined wavelength, or as an array of monopole antennas or a diffraction grating, or as one which selectively responds differently for different wavelengths, producing constructive or destructive interferences (particularly if nanoparticles having different lengths are used such that they cause an amplification effect or constructive or destructive interferences for wavelengths multiple of their length and the cancellation of other that do not meet said condition), or by generally altering any of the characteristics of an incident electromagnetic wave. These alterations can be observable by the naked eye, especially if the wave or waves used are in the visible spectrum, or by means of any type of sensor if the radiation is non-visible, or the altered characteristic is not perceivable by the naked eye, as is the case of the polarization state, phase shift or others.

Likewise, the ordered arrangement of the nanoparticles by means of this method can achieve security characteristics clearly perceivable by the naked eye, such as latent images, or it can allow seeing a pre-printed image from a determined angle while at the same time concealed from another angle, like other techniques commonly used in security printing and not reproducible by means of conventional photocopiers and scanners.

## Claims

1. Security element for value or security documents comprising a plurality of markers, **characterized in that** each marker comprises a first type of hollow nanoparticle provided internally with at least one nanoparticle of another type having smaller dimensions, the smaller dimensioned particle having properties capable of facilitating the orientation of the hollow nanoparticle and said smaller nanoparticle assembly, wherein the hollow nanoparticle is transparent to an orienting field of the smaller particle and has properties facilitating its detection;
wherein the hollow nanoparticle incorporates a fluid inside and is transparent in the visible spectrum, and the small dimensioned particles have magnetic properties and net electric charge, such that they are free to move in the fluid inside the hollow nanoparticle when a magnetic field is applied.

2. Security element according to any of the previous claims, wherein the hollow particle is a TiO₂, BNitr, AlN, ZnO, Al, Ag, Au, Zn₂SiO₄,B, Pd or silica nanotube, nanofiber or fullerene.

3. Security element according to any of the previous claims incorporating several small dimensioned particles having different properties inside the hollow nanoparticle.

4. Bank note incorporating a security element according to any of the previous claims.

## Patentansprüche

1. Sicherheitselement für Wert- oder Sicherheitsdokumente, umfassend eine Vielzahl von Markern,
**dadurch gekennzeichnet,**
**dass** jeder Marker eine erste Art eines hohlen Nanopartikels aufweist, das im Innern mit mindestens einem kleiner dimensionierten Nanopartikel einer anderen Art versehen ist, wobei das kleiner dimensionierte Partikel Eigenschaften aufweist, die die Ausrichtung des hohlen Nanopartikels und der kleineren Nanopartikelanordnung vereinfachen, wobei das hohle Nanopartikel für ein Ausrichtungsfeld des kleineren Partikels durchlässig ist und Eigenschaften aufweist, welche seine Erfassung vereinfachen; wobei das hohle Nanopartikel im Innern eine Flüssigkeit beinhaltet und in dem sichtbaren Spektralbereich durchsichtig ist, und wobei die kleindimensionierten Partikel magnetische Eigenschaften und eine elektrische Nettoladung aufweisen, sodass sie beim Anwenden eines Magnetfelds in der Flüssigkeit innerhalb des hohlen Nanopartikels frei beweglich sind.

2. Sicherheitselement nach einem der vorangehenden Ansprüche, wobei das hohle Partikel eine Nanoröhre, eine Nanofaser oder ein Fulleren aus TiO₂, BNitr, AlN, ZnO, Al, Ag, Au, Zn₂SiO₄, B, Pd oder Silica ist.

3. Sicherheitselement nach einem der vorangehenden Ansprüche, umfassend mehrere kleindimensionierte Partikel mit verschiedenen Eigenschaften innerhalb des hohlen Nanopartikels.

4. Geldschein, umfassend ein Sicherheitselement nach einem der vorangehenden Ansprüche.

## Revendications

1. Élément de sécurité pour des documents de valeur ou de sécurité comprenant une pluralité de marqueurs, **caractérisé en ce que** chaque marqueur comprend un premier type de nanoparticule creuse comprenant intérieurement au moins une nanoparticule d'un autre type ayant des dimensions plus petites, la particule de plus petite dimension ayant des propriétés capables de faciliter l'orientation de l'ensemble de la nanoparticule creuse et de la plus petite nanoparticule, dans lequel la nanoparticule creuse est transparente à un champ d'orientation de la particule plus petite et a des propriétés facilitant sa détection, et dans lequel un fluide est incorporé dans la nanoparticule creuse, la nanoparticule creuse étant transparente dans le spectre visible et les particules de petite dimension ayant des propriétés magnétiques et une charge électrique nette, de sorte qu'elles soient libres de se déplacer dans le fluide contenu à l'intérieur de la nanoparticule creuse lorsqu'un champ magnétique est appliqué.

2. Elément de sécurité selon l'une quelconque des revendications précédentes, dans lequel la particule creuse est un nanotube, une nanofibre ou un fullerène de TiO₂, BNitr, AIN, ZnO, Al, Ag, Au, Zn₂SiO₄, B, Pd ou silice.

3. Elément de sécurité selon l'une quelconque des revendications précédentes, incorporant plusieurs particules de petite dimension ayant des propriétés différentes à l'intérieur de la nanoparticule creuse.

4. Billet de banque intégrant un élément de sécurité selon l'une quelconque des revendications précédentes.
